Europäisches Patentamt

European Patent Office

Office européen des brevets

(19)

(11) Veröffentlichungsnummer : **0 434 025 B1**

(12) # EUROPÄISCHE PATENTSCHRIFT

(45) Veröffentlichungstag der Patentschrift :
29.09.93 Patentblatt 93/39

(51) Int. Cl.⁵ : **A23L 1/164**, A23L 1/308,
A23P 1/14

(21) Anmeldenummer : 90124756.9

(22) Anmeldetag : 19.12.90

(54) **Verfahren zur Herstellung von Crispies mit verbesserten ernährungsphysiologischen Eigenschaften.**

(30) Priorität : 20.12.89 DE 3942035

(43) Veröffentlichungstag der Anmeldung :
26.06.91 Patentblatt 91/26

(45) Bekanntmachung des Hinweises auf die
Patenterteilung :
29.09.93 Patentblatt 93/39

(84) Benannte Vertragsstaaten :
AT BE CH DE DK ES FR GB GR IT LI NL SE

(56) Entgegenhaltungen :
EP-A- 0 144 644
WO-A-89/02225
GB-A- 2 176 089
US-A- 4 497 840
US-A- 4 871 557

(56) Entgegenhaltungen :
FOOD SCIENCE & TECHNOLOGY AB-
STRACTS;1989;AN No. 89-10-m0105,INTER-
NAT.FOOD INFORMATION SERVICE;
H.BOLLINGER:"Auf der Basis des Zuckeraustauschstoffes Palatinit..." & ZUCKER- UND
SUSSWARENWIRTSCHAFT, Vol.42, No.2,
pp.48-52
G.G.BIRCH: "LOW-CALORIE PRODUCTS"
März 1987, ELSEVIER, LONDON, GB

(73) Patentinhaber : **Jacobs Suchard AG**
**Seefeldquai 17**
**CH-8008 Zürich (CH)**

(72) Erfinder : **Stadler, Edwin, Dr.**
**A-5081 Anif (AT)**
Erfinder : **Hergesell, Wolfgang**
**Alte Berchtesgadenerstrasse 17**
**W-8246 Marktschellenberg (DE)**

(74) Vertreter : **Bolte, Erich, Dipl.-Ing. et al**
**c/o Meissner & Bolte Patentanwälte**
**Hollerallee 73**
**D-28209 Bremen (DE)**

## Beschreibung

Die vorliegende Erfindung bezieht sich auf ein Verfahren zur Herstellung von Crispies mit verbesserten ernährungsphysiologischen Eigenschaften.

Crispies, wie sie heute am Markt erhältlich sind, stellen Extrudate dar, die aus einer oder mehreren Mehlsorten oder aus gepufften Cerealienkörnern unter Zusatz von Zucker und weiteren geschmackgebenden Komponenten hergestellt sind. Derartige Produkte sind leicht und knusprig im Geschmack. Wohl am bekanntesten sind Reiscrispies, die beispielsweise aus einem Gemisch aus Reismehl , Weizenmehl, Zucker, Molkepulver, Pflanzenöl hergestellt werden können, wobei Reis mehl Hauptbestandteil der Rezeptur ist. Crispies sind häufig Bestandteil spezieller Süßwarenerzeugnisse, denen sie aufgrund ihres Geschmacks und ihrer Konsistenz besondere organoleptische Eigenschaften verleihen. Viele Verbraucher beurteilen allerdings Crispies, hauptsächlich wegen ihres relativ hohen Kaloriengehalts, der aus den Kohlenhydraten stammt, ernährungsphysiologisch nicht als hochwertig.

Im Hinblick auf das wachsende "kalorienbewußte" Verhalten wird in jüngerer Zeit versucht, den Kaloriengehalt von Süßwaren zu senken. Dabei werden Kalorienträger, hauptsächlich Fette und Kohlenhydrate, ganz oder teilweise durch kalorienarme Komponenten ersetzt. Als Zuckeraustauschstoffe stehen z.B. Zuckeralkohole wie Sorbit, Mannit, Lactit, Xylit usw. zur Verfügung. Als Fettaustauschstoffe können zusätzlich z.B. Polyol-Polyester verwendet werden. Zusätzlich können Nahrungsfasern, die praktisch unverdaulich sind, in die entsprechenden Produkte eingebracht werden. Allerdings beeinflussen die genannten Maßnahmen die organoleptischen Eigenschaften der Produkte nachteilig. Sie werfen zudem technologische Probleme auf, die in den physikalischen Eigenschaften dieser Komponenten begründet sind.

Die Aufgabe der vorliegenden Erfindung besteht nun in erster Linie darin, Rezepturen und Verfahren zur Herstellung von Crispies zu schaffen, die verbesserte ernährungsphysiologische Eigenschaften aufweisen. Insbesondere soll das Verfahren zur Herstellung kalorienreduzierter Crispies geeignet sein.

Diese Aufgabe wird erfindungsgemäß dadurch gelöst, daß ein Gemisch umfassend Hydrokolloide und/oder stark rohfaserhaltiges Material sowie Haferkleie, Zuckeraustauschstoffe, Stärke, Weizenmehl, Aromastoffe und/oder Süßstoff und/oder Farbstoff hergestellt und in einem Kochextruder bearbeitet wird.

Bevorzugte Zusammensetzungen für das zu bearbeitende Gemisch sind in Anspruch 5 angegeben.

Vorzugsweise wird die Bearbeitung des Gemisches in einem Doppelschnecken-Extruder unter den folgenden Bedingungen ausgeführt:
- Extrusionmasse - Austrittstemperatur          100 - 110°C
- Extrusionmassedruck in Abhängigkeit von der Austrittsöffnung          18 - 25 bar
- Schneckendrehgeschwindigkeit (Schneckenkonfiguration für hohe Scherkraft)          250 - 300 U/Min

Zur Ausformung der Crispies im Extruder eignen sich besonders zwei Düsenplatten mit je 8 Löchern mit einem Durchmesser von je 1,2 mm. Die Größe der expandierten Crispies beträgt in diesem Fall 4 - 5 mm.

Nach einem weiteren Merkmal des erfindungsgemäßen Verfahrens werden die Crispies unmittelbar nach dem Austritt aus dem Extruder mit einer Absaugvorrichtung in ein Puffersilo transportiert und zum Feuchtigkeitsausgleich bis zu einer Restfeuchte von ca. 4 % gelagert (mindestens 24 Stunden).

Die spezifische Zusammensetzung des Gemisches der Ausgangsstoffe erlaubt erfindungsgemäß die Herstellung von Crispies, die im Vergleich zu herkömmlichen Crispies verbesserte ernährungspysiologische Eigenschaften (Kalorienreduktion) aufweisen, ohne daß für Crispies charakteristische, geschmackliche Komponenten und die knusprige Beschaffenheit verlorengehen. Während bei der herkömmlichen Herstellung von Crispies Mehl und Zucker etwa 90 % der Zutaten ausmachen, bestehen die in Anspruch 5 aufgeführten Bestandteile nur zu 25 - 60 % aus Mehl/Stärke. Saccharose ist nicht enthalten. Dadurch wird eine Reduktion der Kohlenhydrate um mindestens 30 % erzielt. Die Differenz wird in dem erfindungsgemäßen Gemisch durch Kolloide und/oder stark rohfaserhaltiges Material sowie Zuckeraustauschstoffe ausgeglichen. Hydrokolloide werden bevorzugt aus der folgenden Gruppe ausgewählt: Carrageen, Guar, Johannisbrotmehl, Tragant, Celluloseether, Pektine, Alginate, Agar, Xanthane. Folgende im menschlichen Darmtrakt nur geringfügig abbaubare Materialien eignen sich besonders zur Verwendung im erfindungsgemäßen Verfahren: Polydextrose, Kleie, Ananasstrünke, ausgepreßte Zuckerrübenschnitzel, ausgepreßte Zuckerrohrschnitzel, Albedoschicht von Zitrusfrüchten. Der teilweise Ersatz von Kohlenhydraten durch Hydrokolloide und/oder rohfaserhaltiges Material und andere nur teilweise metabolisierbare Materialien bewirkt eine erhebliche Verminderung des Brennwertes (Kaloriengehaltes) der Crispies. Denn Hydrokolloide und stark rohfaserhaltiges Material besitzen praktisch keinen Nährwert.

Rohfaserhaltige Materialien sind aber als Ballaststoffe zur Anregung der Darmperistaltik und zur Förderung der Absonderung von Verdauungssäften sehr wertvoll.

Bestimmte Rohfasern, wie z.B. Pektine, besitzen die Eigenschaft, Cholesterin zu binden und so den Blutcholesterinspiegel zu senken. Diese Eigenschaft zeigt Haferkleie besonders ausgeprägt. Sie ist daher wesentlicher Bestandteil aller Ausgangsgemische zur Herstellung von Crispies gemäß der Erfindung.

Als Zuckeraustauschstoffe können z.B. Zuckeralkohole wie Sorbit, Mannit, Xylit, Maltit, Lactit, Palatinit verwendet werden. Wichtig für die Verarbeitbarkeit der Zuckeraustauschstoffe ist ihre Hygroskopizität. Bei bestimmten Zuckeraustauschstoffen ist das technologische Verhalten unbefriedigend. Bei der Auswahl der Zuckeraustauschstoffe ist neben dem technologischen Gesichtspunkt der Geschmack dieser Substanzen maßgebend. Monosaccharidalkohole bewirken beim Verzehr einen kühlenden Effekt in der Mundhöhle, der durch die unterschiedliche Lösungsenthalpie der einzelnen Saccharide verursacht wird. Xylit, Mannit und Sorbit haben eine hohe negative Lösungswärme und geben dadurch einen atypischen Geschmack. Diese Zuckeraustauschstoffe eignen sich weniger gut zur Verwendung in Crispies.

Als besonders vorteilhaft erwies sich der Einsatz von Palatinit, Lactit und Leucrose als Zuckeraustauschstoffe, da sie verfahrenstechnisch unproblematisch sind und geschmacklich positiv zu bewerten sind.

Eine weitere ernährungsphysiologische Aufwertung der Crispies kann durch die Maßnahme gemäß Anspruch 8 erzielt werden. Danach werden Proteinisolate (Milch, Soja etc.) dem Gemisch der Ausgangsstoffe zugemengt. Dies ist ohne verfahrenstechnische Probleme möglich.

Die erfindungsgemäß hergestellten Crispies finden Verwendung als Grundstoff zur Herstellung von süßen oder salzigen Snacks in verschiedenen Ausformungen (Riegel, Pralinen, Happen usw.).

Beispielsweise werden die Crispies nach dem Feuchtigkeitsausgleich mit einem sogenannten Binder (Agglomerationsmittel), schonend gemischt und anschließend maschinell in an sich bekannter Weise zu einem endlosen Produktband ("Teppich") mit einer Dicke von ca. 20 mm ausgeformt. In der Folge wird das endlose Produkt in der Länge und Breite auf das gewünschte Format geschnitten oder gestanzt und mit Schokolade überzogen oder ohne Schokoladenüberzug verpackt.

Vorzugsweise ist das Agglomerationsmittel (Binder) ein kalorienarmes Mittel folgender Zusammensetzung:

| | |
|---|---|
| Palatinit | 40 % |
| Polydextrose | 58 % |
| Aroma | |
| Süßstoff | 2 % |

Zur Herstellung dieses Agglomerationsmittels (Binder) werden Palatinit und Polyextrose in Wasser gelöst und auf 80 % Trockensubstanz eingekocht. Anschließend wird die Masse auf 60°C abgekühlt, aromatisiert und je nach Süßstoff vor oder nach dem Eindicken gesüßt. Für ein kontinuierliches Herstellverfahren kann das Agglomerationsmittel auf 40 - 45°C abgekühlt werden. Der Kaloriengehalt dieses Agglomerationsmittels beträgt 185 Kcal/100g (777 KJoule/100g).

Für die Umhüllung der erfindungsgemäß hergestellten Crispies eignen sich herkömmliche Schokoladen, wie auch kalorienreduzierte Schokoladen, die unter Verwendung von Zuckeraustauschstoffen und/oder Fettersatzstoffen wie z.B. Polyol-Polyester, hergestellt werden.

Bei einem salzigen Snack gilt prinzipiell die gleiche Zusammensetzung. Es muß jedoch ein relativ wenig süßer Zuckeraustauschstoff verwendet werden, und anstelle von Süßstoff wird Salz zugesetzt. Die geschmackliche Abrundung wird durch Zusatz von entsprechenden Gewürzen und Aromastoffen erreicht.

Nachfolgend wird die Erfindung anhand eines detaillierten Ausführungsbeispiels näher erläutert:

Aus folgenden Ausgangsstoffen wird eine trockene, homogene Mischung hergestellt:

Nachstehende Zusammensetzung bezieht sich auf eine Charge von 1000 kg.

| | | |
|---|---|---|
| Polydextrose | 440 kg | (44 Gew.%) |
| Haferkleie | 130 kg | (13 Gew.%) |
| Palatinit | 120 kg | (12 Gew.%) |
| Weizenmehl | 200 kg | (20 Gew.%) |
| Stärke | 100 kg | (10 Gew.%) |
| Aromastoff | | |
| Farbstoff | 10 kg | ( 1 Gew.%) |
| Süßstoff | | |

Diese Mischung wird in einem schnellaufenden, gleichläufigen Doppelschneckenextruder zu "Crispies" verarbeitet.

Die Prozeßparameter sind:

- Schenckendrehgeschwindigkeit 290 U/Min
- Temperatur in der Extruder-Einzugszone 95°C
- Temperatur in der Extruder-Heiz- und Scherzone 150°C
- Extrusionmassedruck vor der Austrittsöffnung 22 bar
- Extrusionmasseaustrittstemperatur 105°C

Als sogenannte Matrizen zur Ausformung der Crispies werden 2 Düsenplatten mit je 8 Löchern mit einem Durchmesser von 1,2 mm verwendet. Die Größe der expandierten Crispies beträgt dabei 4 - 5 mm. Die Crispies (Extrudate) werden unmittelbar nach dem Austritt aus dem Extruder mit einer Absaugvorrichtung in ein Puffersilo transportiert und für den Feuchtigkeitsausgleich ca. 24 Stunden gelagert. Die Restfeuchte liegt bei ca. 4 %.

Der Kaloriengehalt dieser Crispies beträgt 210 - 230 Kcal/100g (882 - 966 KJoule/100g).

Die Weiterverarbeitung der Crispies zu Riegeln beispielsweise kann nach folgender Rezeptur erfolgen:

| | Riegel mit Schokoladeumhüllung | Riegel ohne Umhüllung |
|---|---|---|
| erfindungsgemäße Crispies | 11 g | 13 g |
| Agglomerationsmittel | 7,5 g | 9 g |
| Schokolade | 6,5 g | - |

Der Kaloriengehalt von Riegeln dieser Rezeptur mit Schokoladeüberzug (herkömmliche Schokolade) beträgt ca. 280 Kcal/100g (1.175 KJ/100g) und ohne Schokoladeüberzug 220 Kcal/100g (924 KJ/100g), d.h. ein Riegel von ca. 25g bzw. 22g hat ca. 70 Kcal/Stück bzw. 48 Kcal/Stück.

Die Vorteile der beschriebenen Erfindung liegen darin, daß Crispies mit guten ernährungsphysiologischen und ausgezeichneten organoleptischen Eigenschaften hergestellt werden können. Dies gelingt durch die Auswahl einer speziellen Mischung an Ausgangsstoffen in Kombination mit spezifischer Verfahrensapparatur und entsprechenden Verfahrensbedingungen.

**Patentansprüche**

1.    Verfahren zur Herstellung Von Crispies mit verbesserten ernährungsphysiologischen Eigenschaften, **da-**

**durch gekennzeichnet**, daß ein Gemisch umfassend Hydrokolloide und/oder stark rohfaserhaltiges Material, Haferkleie, Zuckeraustauschstoffe, Stärke, Weizenmehl, Aromastoffe und/oder Süßstoff und/oder Farbstoff hergestellt und in einem Kochextruder bearbeitet wird.

2. Verfahren nach Anspruch 1, dadurch gekennzeichnet, daß die Bearbeitung des Gemisches in einem Doppelschnecken-Extruder mit folgenden Parametern durchgeführt wird:
   - Extrusionmasse - Austrittstemperatur          100 - 110°C
   - Extrusionmassedruck in Abhängigkeit von der Austrittsöffnung          18 - 25 bar
   - Schneckendrehgeschwindigkeit (Schnecken-Konfiguration für hohe Scherkraft)          250 - 300 U/Min.

3. Verfahren nach Anspruch 1 oder 2, dadurch gekennzeichnet, daß der Kochextruder zur Ausformung der Crispies als Matrizen zwei Düsenplatten mit je 8 Löchern mit einem Durchmesser von je 1,2 mm aufweist.

4. Verfahren nach einem oder mehreren der Ansprüche 1 bis 3, dadurch gekennzeichnet, daß die Crispies unmittelbar nach dem Austritt aus dem Extruder mit einer Absaugvorrichtung in ein Puffersilo transportiert und zum Feuchtigkeitsausgleich bis zu einer Restfeuchte von ca. 4 % gelagert werden.

5. Verfahren nach einem oder mehreren der Ansprüche 1 bis 4, dadurch gekennzeichnet, daß das eingesetzte Gemisch folgende Zusammensetzung hat:

| | |
|---|---|
| Hydrokolloide und/oder stark rohfaserhaltiges Material | 25 - 50 % |
| Haferkleie | 10 - 15 % |
| Zuckeraustauschstoffe | 10 - 25 % |
| Weizenmehl | 20 - 50 % |
| Stärke | 5 - 10 % |
| Süßstoff<br>Farbstoff<br>Aromastoff | 1 % |

6. Verfahren nach einem oder mehreren der Ansprüche 1 bis 5, dadurch gekennzeichnet, daß die Zuckeraustauschstoffe aus der folgenden Gruppe ausgewählt sind: Sorbit, Mannit, Xylit, Maltit, Lactit, Palatinit oder aus Mischungen derselben bestehen.

7. Verfahren nach einem oder mehreren der vorangehenden Ansprüche 1 bis 6, dadurch gekennzeichnet, daß die Hydrokolloide aus der folgenden Gruppe ausgewählt sind: Carrageen, Guar, Johannisbrotmehl, Tragant, Celluloseether, Pektine, Alginate, Agar, Xanthane oder aus Mischungen derselben besteht; und daß das stark rohfaserhaltige Material aus der Gruppe Getreidekleien, Ananasstrünke, ausgepreßte Zuckerrübenschnitzel , ausgepreßte Zuckerrohrschnitzel, Albedoschicht von Zitrusfrüchten sowie Polydextrose usw. ausgewählt ist oder aus Mischungen derselben besteht.

8. Verfahren nach einem oder mehreren der Ansprüche 1 bis 7, dadurch gekennzeichnet, daß dem Gemisch Proteinisolate zugesetzt ist.

9. Verfahren nach Anspruch 4, dadurch gekennzeichnet, daß die Crispies mit einer Restfeuchte von 4 % oder weniger mit einem kalorienarmen Agglomerationsmittel (Binder) vermischt werden und in an sich bekannter Weise zu einem endlosen Produktband ausgeformt werden.

10. Verfahren nach Anspruch 9, dadurch gekennzeichnet, daß das kalorienarme Agglomerationsmittel folgende Zusammensetzung hat:

```
Palatinit                                   40 %
Polydextrose                                58 %
Aromastoffe    ⎫
Süßstoff       ⎬                             2 %
```

11. Verwendung von Crispies mit verbesserten ernährungsphysiologischen Eigenschaften, hergestellt nach einem Verfahren gemäß einem oder mehreren der Ansprüche 1 bis 10, zur Herstellung von süßen Snacks in verschiedenen Ausformungen wie z.B. Riegel, Pralinen, Happen usw.

12. Verwendung von Crispies mit verbesserten ernährungsphysiologischen Eigenschaften, hergestellt nach einem Verfahren gemäß einem oder mehreren der Ansprüche 1 bis 10, zur Herstellung von süßen Snacks, die Crispies lose oder geformt mit einem Überzug aus herkömmlicher oder kalorienreduzierter Schokolade enthalten.

13. Verwendung von Crispies mit verbesserten ernährungsphysiologischen Eigenschaften, hergestellt nach einem Verfahren gemäß einem oder mehreren der Ansprüche 1 bis 10, zur Herstellung von salzigen Snacks in verschiedenen Ausformungen.

14. Crispies, hergestellt nach einem Verfahren gemäß einem der Ansprüche 1 bis 10, enthaltend Hydrokolloide und/oder stark rohfaserhaltiges Material sowie Haferkleie, Zuckeraustauschstoff, Stärke, Weizenmehl , Aromastoffe und/oder Süßstoffe und/oder Farbstoffe.

15. Crispies gemäß Anspruch 14, dadurch gekennzeichnet, daß sie folgende Zusammensetzung aufweisen:

```
Hydrokolloide und/oder stark
rohfaserhaltiges Material           25 - 50 %
Haferkleie                          10 - 15 %
Zuckeraustauschstoffe               10 - 25 %
Weizenmehl                          10 - 50 %
Stärke                               5 - 10 %
Farbstoff       ⎫
Süßstoffe       ⎬                         1 %
Aromastoffe     ⎭
Wasser                                    4 %
```

## Claims

1. Process for the production of Crispies having improved nutritional properties, characterised in that a mixture including hydrocolloids and/or material having a high crude fibre content, oat bran, sugar substitutes, starch, wheat flour, flavourings and/or sweetener and/or colouring is produced and processed in a cooker-extruder.

2. Process according to Claim 1, characterised in that the processing of the mixture is carried out in a double-screw extruder with the following parameters:
   - extrusion mass - exit temperature        100 - 110°C
   - extrusion mass pressure depending on exit-orifice        18 - 25 bar

- screw speed (screw configuration for high shear force)　　　250 - 300 rpm.

3. Process according to Claim 1 or 2, characterised in that the cooker-extruder, for shaping the Crispies, is provided as matrices with two dieplates each having 8 holes each having a diameter of 1.2 mm.

4. Process according to one of more of Claims 1 to 3, characterised in that the Crispies, immediately after exit from the extruder, are transported by a suction apparatus into a puffer silo and are stored for moisture equilibration up to a residual moisture content of approximately 4 %.

5. Process according to one or more of Claims 1 to 4, characterised in that the mixture used has the following composition:
Hydrocolloids and/or material having
a high crude fibre content　　　25 - 50 %
Oat bran　　　10 - 15 %
Sugar substitues　　　10 - 25 %
Wheat flour　　　20 - 50 %
Starch　　　5 - 10 %
Sweetener }
Colouring }　　　1 %
Flavouring }

6. Process according to one or more of Claims 1 to 5, characterised in that the sugar substitutes are selected from the following group: sorbitol, mannitol, xylitol, maltitol, lactitol, Palatinit or are composed of mixtures of the same.

7. Process according to one or more of the preceding Claims 1 to 6, characterised in that the hydrocolloids are selected from the following group: carrageenan, guar gum, carob bean flour, tragacanth, cellulose ethers, pectins, alginates, agar, xanthans or are composed of mixtures of the same;
and in that the material having a high crude fibre content is selected from the group comprising cereal brans, pineapple stems, pressed sugar beet pulp, pressed sugar cane pulp, albedo layer of citrus fruits and polydextrose etc. or is composed of mixtures of the same.

8. Process according to one of more of Claims 1 to 7, characterised in that protein isolate is added to the mixture.

9. Process according to Claim 4 characterised in that the Crispies having a residual moisture content of 4 % or less are mixed with a low-calorie agglomeration agent (binder) and are shaped in a manner known per se to give an endless product strip.

10. Process according to Claim 9, characterised in that the low-calorie agglomeration agent has the following composition:
Palatinit 40 %
Polydextrose 58 %
Flavourings }
Sweeter } 2 %

11. Use of Crispies having improved nutritional properties, produced by a process according to one or more of Claims 1 to 10, for the production of sweet snacks in various shapes such as bars, chocolates, morsels etc.

12. Use of Crispies having improved nutritional properties, produced by a process according to one or more of Claims 1 to 10, for the production of sweet snacks which contain Crispies loosely or moulded having a coating made of conventional or calorie-reduced chocolate.

13. Use of Crispies having improved nutritional properties, produced by a process according to one or more of Claims 1 to 10, for the production of salty snacks in various shapes.

14. Crispies, produced by a process according to one of Claims 1 to 10, containing hydrocolloids and/or material having a high crude fibre content and oat bran, sugar substitute, starch, wheat flour, flavourings and/or sweeteners and/or colourings.

15. Crispies according to Claim 14, characterised in that they have the following composition:
Hydrocolloids and/or material having
a high crude fibre content 25 - 50 % Oat bran 10 - 15 %
Sugar substitues 10 - 25 %
Wheat flour 10 - 50 %
Starch 5 - 10 %
Sweetener }
Colouring } 1 %
Flavouring }
Water 4 %

**Revendications**

1. Procédé de préparation de flocons croustillants à propriétés nutritionnelles améliorées, caractérisé en ce qu'on prépare un mélange comportant des hydrocolloïdes et/ou une matière à forte teneur en fibres brutes, du son d'avoine, des substituts du sucre, de l'amidon, de la farine de froment, des substances aromatiques et/ou une substance édulcorante et/ou un colorant, et en ce qu'on le traite dans une extrudeuse de cuisson.

2. Procédé suivant la revendication 1, caractérisé en ce que l'on effectue le traitement du mélange dans une extrudeuse à double vis avec les paramètres suivants :
   - température de sortie de la masse d'extrusion          100-110°C
   - pression de la masse d'extrusion en fonction de l'ouverture de sortie          18 - 25 bars
   - vitesse des vis (configuration des vis pour une haute force de cisaillement)          250-300 t/min.

3. Procédé suivant l'une des revendications 1 et 2, caractérisé en ce que l'extrudeuse de cuisson présente pour le démoulage des flocons croustillants, comme matrices, deux plaques à ajutages ayant chacune huit trous présentant un diamètre de chacun 1,2 mm.

4. Procédé suivant l'une ou plusieurs des revendications 1 à 3, caractérisé en ce que les flocons croustillants sont, directement après la sortie de l'extrudeuse, transportés par un dispositif d'aspiration dans un silo d'égalisation et en ce que, pour l'équilibrage de l'humidité, ils sont entreposés jusqu'à un taux d'humidité résiduaire d'environ 4 %.

5. Procédé suivant l'une ou plusieurs des revendications 1 à 4, caractérisé en ce que le mélange mis en oeuvre présente la composition suivante :

```
hydrocolloïdes et/ou matière à forte
  teneur en fibres brutes             25-50 %
Son d'avoine                          10-15 %
Substituts du sucre                   10-25 %
Farine de froment                     20-50 %
Amidon                                 5-10 %
Agent édulcorant        }
Colorant                }              1 %
Substance aromatique    }
```

6. Procédé suivant une ou plusieurs des revendications 1 à 5, caractérisé en ce que les substituts du sucre sont choisis parmi le groupe suivant: la sorbite, la mannite, la xylite, la lactite, la palatinite ou sont constitués de mélanges de ceux-ci.

**7.** Procédé suivant une ou plusieurs des revendications 1 à 6 précédentes, caractérisé en ce que les hydrocolloïdes sont sélectionnés parmi le groupe suivant : carragheen, guar, farine de caroube, gomme adragante, éther de cellulose, pectines, alginates, agar, xanthanes, ou sont constitués de mélanges de ces derniers, et en ce que la matière à forte teneur en fibres brutes est sélectionnée dans le groupe des sons de céréales, des trognons d'ananas, des cossettes de betteraves exprimées, des fragments de canne à sucre exprimés, d'une couche à albédo de fruits citrus, ainsi que de la polydextrose, etc., ou est constituée de mélanges de ces substances.

**8.** Procédé suivant l'une ou plusieurs des revendications 1 à 7, caractérisé en ce qu'au mélange on ajoute des produits d'isolement protéiniques.

**9.** Procédé suivant la revendication 4, caractérisé en ce qu'aux flocons croustillants présentant un taux d'humidité résiduaire de 4 % ou moins, on mélange un agent d'agglomération pauvre en calories (liant) et en ce que, d'une manière connue en soi, on les démoule sous la forme d'une bande de produit sans fin.

**10.** Procédé suivant la revendication 9, caractérisé en ce que l'agent d'agglomération pauvre en calories présente la composition suivante :

```
Palatinite                    40 %
Polydextrose                  58 %
Substances aromatiques     )
Substance édulcorante      )    2 %
```

**11.** Utilisation de flocons croustillants à propriétés nutritionnelles améliorées, préparés suivant un procédé selon une ou plusieurs des revendications 1 à 10, pour la préparation de collations sucrées sous différentes formes, telles que par exemple des barres, des pralines, des bouchées, etc.

**12.** Utilisation de flocons croustillants à propriétés nutritionnelles améliorées, préparés suivant un procédé selon une ou plusieurs des revendications 1 à 10, pour la préparation de collations sucrées, qui contiennent des flocons croustillants sous une forme lâche ou mise en forme avec un revêtement de chocolat courant ou à teneur réduite en calories.

**13.** Utilisation de flocons croustillants à propriétés nutritionnelles améliorées, préparés selon un procédé suivant une ou plusieurs des revendications 1 à 10, pour la préparation de collations salées dans des formes différentes.

**14.** Flocons croustillants préparés suivant un procédé selon une des revendications 1 à 10, contenant des hydrocolloïdes et/ou une matière à forte teneur en fibres brutes ainsi que du son d'avoine, un substitut du sucre, de l'amidon, de la farine de froment, des substances aromatiques et/ou des substances édulcorantes et/ou des colorants.

**15.** Flocons croustillants suivant la revendication 14, caractérisés en ce qu'ils présentent la composition suivante :

hydrocolloïdes et/ou matière à forte

  teneur en fibres brutes                 25-50 %

Son d'avoine                                10-15 %

Substituts du sucre                10-25 %

Farine de froment                  10-50 %

Amidon                                      5-10 %

Colorant

Substances édulcorantes      }     1 %

Substances aromatiques

Eau                                      4 %